# EUROPÄISCHE PATENTSCHRIFT

(11) **EP 3 678 837 B1**
(45) Veröffentlichungstag und Bekanntmachung des Hinweises auf die Patenterteilung: **24.11.2021**
(21) Anmeldenummer: 18769641.4
(22) Anmeldetag: 10.09.2018
(51) Int. Cl.: B29C 49/42, B29C 49/78, B29C 49/28, B29C 49/64, B29C 49/24, B67C 7/00, B29C 49/36, B29C 49/46, B29C 49/08

(54) **FLEXIBLE ANLAGE ZUM BEHANDELN VON BEHÄLTNISSEN**
FLEXIBLE SYSTEM FOR TREATING CONTAINERS
INSTALLATION FLEXIBLE DE TRAITEMENT DE RÉCIPIENTS

(30) Priorität: 08.09.2017 DE 102017120762
(43) Veröffentlichungstag der Anmeldung: 15.07.2020
(73) Patentinhaber: Krones AG, 93073 Neutraubling (DE)
(72) Erfinder: POESCHL, Stefan, 93073 Neutraubling (DE); HAUSLADEN, Wolfgang, 93073 Neutraubling (DE)
(74) Vertreter: Bittner, Bernhard
(86) Internationale Anmeldenummer: PCT/EP2018/074314
(87) Internationale Veröffentlichungsnummer: WO 2019/048677

(56) Entgegenhaltungen:
- EP-A1- 2 918 391
- EP-B1- 2 447 038
- DE-A1-102010 042 165
- US-A1- 2011 236 517
- US-A1- 2012 091 636
- US-A1- 2015 079 220

## Beschreibung

Die vorliegende Erfindung bezieht sich auf eine Vorrichtung und ein Verfahren zum Behandeln von Behältnissen. Aus dem Stand der Technik sind zahlreiche derartiger Vorrichtungen bekannt. Diese weisen üblicherweise einen Ofen auf, der Kunststoffvorformlinge erwärmt, sowie eine diesem Ofen nachgeordnete Umformungseinrichtung, wie beispielsweise eine Blasformmaschine, welche die Kunststoffvorformlinge zu den Kunststoffbehältnissen umformt. Weiterhin weisen derartige Anlagen oftmals noch eine Etikettiereinrichtung auf, eine Fülleinrichtung, welche die Behältnisse befüllt, sowie eine Verschließeinrichtung, welche die befüllten Behältnisse mit Verschlüssen verschließt.

Derartige Maschinen weisen jedoch oftmals den Nachteil auf, dass sie nur schwer umgerüstet werden können, insbesondere umgerüstet werden auf unterschiedliche Behältnisgattungen, auf unterschiedliche Füllgüter und dergleichen. Dabei kann in der Regel nur eine Behälterart produziert werden, in der Regel nur ein Etikett angebracht werden und auch nur eine Produktart abgefüllt werden. Dies ergibt sich üblicherweise durch in sich starre und träge Funktionen oder Prozesse in den Maschinen.

US2011236517A1 offenbart eine Vorrichtung und ein Verfahren nach den Oberbegriffen. DE102010042165A1 offenbart weitere Ausführungen von von Abfüllvorrichtungen und Füllventilen.

Mit diesem Stand der Technik lässt sich die in jüngerer Zeit seitens der Kunden oder Endkunden geforderte Flexibilität nicht umsetzen. Es sind stets aufwändige Rüstprozesse erforderlich sowie Rüstzeiten, die benötigt werden, um auf unterschiedliche Behälter oder Produkte umzustellen. Dies bedeutet gleichzeitig höhere Produktions- und Endproduktkosten.

Der vorliegenden Erfindung liegt daher die Aufgabe zugrunde, die Variabilität und Flexibilität derartiger Maschinen zu erhöhen. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung wird im Anspruch 1 vorgeschlagen und ein entsprechendes Verfahren wird im Anspruch 10 vorgeschlagen.

Erfindungsgemäß weist die Vorrichtung eine Zuordnungseinrichtung und/oder (allgemein) eine Zuordnungsmöglichkeit auf, welche wenigstens eine Zuordnung zwischen wenigstens einer Erwärmungsstation, wenigstens einer Umformungsstation und/oder wenigstens einem Ausstattungsaggregat und/oder wenigstens einer Befüllungseinrichtung ermöglicht. Es wird daher vorgeschlagen, dass eine insbesondere steuerungsseitige Zuordnung zwischen den einzelnen Aggregaten erfolgt, sodass erreicht werden kann, dass eine bestimmte Erwärmungseinrichtung einer bestimmten Umformungsstation und/oder auch einem bestimmten Ausstattungsaggregat zugeordnet ist. Genauer soll festlegbar sein, dass ein bestimmter Kunststoffvorformling von einer bestimmten Erwärmungseinrichtung erwärmt, anschließend von einer dieser zugeordneten Umformungsstation umgeformt und anschließend von einer wiederum vorbestandenen Ausstattungseinrichtung ausgestattet wird. Auf diese Weise können unterschiedliche Behältnisse mit der gleichen Anlage ohne aufwändige Formatwechsel gefertigt werden. Es wird daher bevorzugt vorgeschlagen, dass insbesondere durch den Einsatz von flexiblen Funktions- oder Prozessmodulen gleichzeitig unterschiedliche Behälter, Behälterausstattungen und Produktfüllungen erreicht werden, wobei dies je nach technischer Ausprägung der gesamten bzw. zusammengesetzten Funktionsmodule möglich ist.

Dabei sind bevorzugt unterschiedliche Zuordnungen möglich. So kann eine bestimmte Erwärmungsstation einer bestimmten Umformungsstation, einer bestimmten Ausstattungseinrichtung und/oder einem bestimmten Füllelement zugeordnet werden. In entsprechender Weise ist auch eine Zuordnung der Umformungsstationen, der Ausstattungseinrichtungen und der Füllelemente möglich.

Bei der Ausstattungseinrichtung handelt es sich um eine Etikettiereinrichtung, welche die Behältnisse mit Etiketten versieht. Dabei wäre es denkbar, dass die Etikettierung mittels eines zusätzlichen etwa auf den Etiketten angebrachten Leims erfolgt. Es können aber auch Etikettiereinrichtungen eingesetzt werden, welche Selbstklebeetiketten an den Behältnissen anbringen.

Daneben kann es sich bei der Ausstattungseinrichtung auch um eine Druckeinrichtung handeln, welche an den Behältnissen einen Aufdruck anbringt.

Bei einer weiteren vorteilhaften Ausführungsform kann auch eine oder können auch mehrere Verschlussherstellungseinrichtungen vorgesehen sein, welche Behältnisverschlüsse herstellen. Bei diesen Verschlussherstellungseinrichtungen kann es sich beispielsweise um Digitaldruckeinrichtungen handeln welche diese Behältnisverschlüsse herstellen.

Durch diese Zuordnung ist im Wesentlichen gleichzeitige Herstellung zweier Produkte möglich. Unter im Wesentlichen gleichzeitig wird verstanden, dass wenigsten zwei Produkte während eines Arbeitsgangs produziert werden können, insbesondere ohne dass hierzu Umrüstarbeiten an der Maschine vorgenommen werden müssen. Unter zwei verschiedenen Produkten werden zwei Produkte verstanden, welche sich in wenigstens einem Merkmal unterscheiden, wobei das Merkmal insbesondere aus einer Gruppe von Merkmalen ausgewählt ist, welche eine Behältnisform, eine Behältnisgröße, ein Etikett, einen Druck, einen Verschluss oder dergleichen enthält.

Bevorzugt ist als wenigstens eine Zuordnung zwischen einem ersten Aggregat einer ersten Behandlungseinrichtung (Erwärmungseinrichtung, Umformungseinrichtung, Ausstattungseinrichtung, Fülleinrichtung) und einem ersten Aggregat einer zweiten Behandlungseinrichtung möglich. Bevorzugt ist eine Zuordnung mehrerer Aggregate der unterschiedlichen Behandlungseinrichtungen und besonders bevorzugt aller Aggregate möglich.

So kann beispielsweise die Erwärmung der Kunststoffvorformlinge zukünftig in einem Einzelprozess erfolgen, wobei individuell Kunststoffvorformlinge unterschiedlicher Geometrie und Gewicht erwärmt werden können. Ein entsprechend flexibles Füllventil kann bis zu fünf unterschiedliche Produkte und Produktmengen abfüllen. Daneben kann auch eine Steuerungseinrichtung vorgesehen sein, welche diese Flexibilität ermöglichen kann und auf diese Weise einen höheren Kundennutzen in Bezug auf Flexibilität in der Abfülltechnik garantieren kann.

Es wird somit eine erhöhte Flexibilität in der Produktherstellung erreicht. Eine gleichzeitige Abfüllung von unterschiedlichen Produkten bezogen auf die Behältnisse, auf das Etikett und das Produkt und die Verschlüsse ist somit möglich.

Daneben besteht bevorzugt auch die Möglichkeit, eine Linie sortenrein zu betreiben und/oder bei Bedarf unterschiedlichste Produkte gleichzeitig zu verarbeiten. Der Vorteil hierin sind kürzere Umrüstzeiten und somit auch Kostenvorteile im Vergleich zum Stand der Technik. Auf diese Weise wird eine hohe Flexibilität der Anlage erreicht, da diese flexibel zwischen Behältnissorten, Füllgütern usw. umgestellt werden kann.

Bei der Vorrichtung zum Umformen von Kunststoffvorformlingen zu Kunststoffbehältnissen handelt es sich bevorzugt um eine Blasmaschine. Dies bedeutet, dass die Kunststoffvorformlinge zunächst in einer Heizstrecke thermisch konditioniert und anschließend durch Beaufschlagung mit einem flüssigen oder gasförmigen Medium expandiert werden. Das fließfähige Medium steht bevorzugt unter Druck. Für die Zuführung des unter Druck stehenden Mediums weist die Vorrichtung eine Blasdüse auf, welche an eine Mündung der Kunststoffvorformlinge dichtend anlegbar ist, um die Kunststoffvorformlinge so mit flüssigem oder gasförmigem Medium zu expandieren. Daneben ist bevorzugt auch eine Ventilanordnung vorgesehen, welche die Zuführung der Blasluft an die Kunststoffvorformlinge steuert.

Bevorzugt handelt es sich bei der Blasmaschine um eine Streckblasmaschine, was bedeutet, dass die Vorformlinge vor und/oder während der Expansion mittels einer Reckstange in Längsrichtung gedehnt werden. Die Blasstationen weisen dabei jeweils Reckstangen auf, welche in die Kunststoffvorformlinge einführbar sind und die Kunststoffvorformlinge in ihrer Längsrichtung dehnen. Die Reckstangen weisen dabei bevorzugt einen elektrischen Antrieb auf.

Bevorzugt handelt es sich bei der Umformungseinrichtung um eine Vorrichtung, welche die Kunststoffvorformlinge mittels eines gasförmigen Mediums und insbesondere mittels Blasluft zu den Kunststoffbehältnissen umformt. Es könnte jedoch auch eine Umformungseinrichtung zum Einsatz kommen, welche die Kunststoffvorformlinge durch Beaufschlagung derselben mit einem flüssigen Medium und insbesondere mit einem abzufüllenden Produkt expandiert. In diesem Fall wird durch das Einfüllen eines Füllguts auch der Kunststoffvorformling zu dem Kunststoffbehältnis, insbesondere der Kunststoffflasche umgeformt. In diesem Fall kann die Vorrichtung beispielsweise Füllventile aufweisen, welche zum Einfüllen einer Flüssigkeit in den Kunststoffvorformling geeignet und bestimmt sind.

Bei einer vorteilhaften Ausführungsform ist eine Vielzahl von Blasstationen an einem gemeinsamen beweglichen Träger angeordnet. Bei diesem Träger handelt es sich dabei insbesondere um einen drehbaren Träger. Die Blasstationen weisen jeweils eine Blasformeinrichtung auf, welche bevorzugt einen Hohlraum ausbilden, innerhalb dessen die Kunststoffvorformlinge zu den Kunststoffbehältnissen expandierbar sind. Diese Blasformeinrichtungen sind dabei bevorzugt mehrteilig ausgebildet und weisen zwei Blasformhälften und eine Bodenform auf. Bevorzugt sind diese Blasformhälften lösbar an einer Formträgerschale oder an den Blasformträgern angeordnet. Die Blasformträger sind bezüglich einander schwenkbar sind, um die Blasformeinrichtungen zu öffnen und zu schließen. Zudem weist der Blasformträger Verriegelungsmechanismen auf, um die Formhälften während des Blasvorgangs gegeneinander zu verriegeln.

Besonders bevorzugt ist die Blasmaschine bzw. sind der Träger und die Blasformanordnungen innerhalb eines Reinraums angeordnet, welcher die Blasformmaschine gegenüber einer unsterilen Umgebung abgrenzt. Antriebseinrichtungen für die Verschließung, Verriegelung und/oder Öffnung der Blasformen sind dabei bevorzugt außerhalb des Reinraums angeordnet.

Die Blasformeinrichtungen werden bevorzugt innerhalb des Reinraums transportiert. Der Reinraum wird bevorzugt von mehreren Wandungen begrenzt. Bevorzugt wird der Reinraum dabei von wenigstens einer stehenden Wandung und einer sich gegenüber dieser stehenden Wandung bewegenden Wandung begrenzt. Der Reinraum grenzt die Blasformen insbesondere von einer unsterilen Umgebung ab. Vorteilhaft ist der Reinraum ring- oder torusartig um die Blasstationen bzw. Umformungsstationen und/oder den Transportpfad der Kunststoffbehältnisse ausgebildet.

Bei einer weiteren vorteilhaften Ausführungsform ermöglicht die Erwärmungseinrichtung die individuelle Erwärmung der Kunststoffvorformlinge. Während im Stand der Technik üblicherweise Durchlauföfen verwendet werden, durch welche die Kunststoffvorformlinge durchlaufen, wird hier vorgeschlagen, dass die Erwärmungseinrichtung eine individuelle und gegebenenfalls auch individuell unterschiedliche Erwärmung einzelner Kunststoffvorformlinge ermöglicht. Bevorzugt weist die Transporteinrichtung der Erwärmungseinrichtung einen bewegbaren Träger auf, an dem die Erwärmungsstationen angeordnet sind. Bevorzugt ist dabei jeder einzelnen Erwärmungsstation ein einzelner Kunststoffvorformling zuordenbar. Bevorzugt handelt es sich bei der Erwärmungseinrichtung um eine Mikrowellenerwärmungseinrichtung, es könnte jedoch auch eine Infraroterwärmungseinrichtung verwendet werden.

Durch die Verwendung einer Mikrowellenerwärmungseinrichtung können Kunststoffvorformlinge, abhängig von Gewicht, Kontur, Farbe usw., und auch der späteren Ausprägung der Behälterkontur und dem Füllvolumen unterschiedlich erwärmt werden. Eine Mikrowelleneinheit kann unabhängig zu einer anderen Mikrowelleneinheit den Kunststoffvorformling individuell erwärmen. Abhängig davon, wie das Blasmodul mit unterschiedlichen Blasformen innerhalb eines Blaskarussells ausgestattet ist, kann dieses mit den unterschiedlichen Kunststoffvorformlingen (Farbe, Kontur, Größe, Temperaturprofil usw.) bestückt werden. Hier sollte jedoch eine eindeutige Zuordnung eines definierten Kunststoffvorformlings zu der passenden Blasform gewährleistet werden.

Bevorzugt werden die unterschiedlichen Kunststoffvorformlinge bereits im Vorfeld der Erwärmungseinrichtung definiert an die richtige Erwärmungseinrichtung übergeben, damit die Kunststoffvorformlinge mit dem passenden Temperaturprofil an die zugeordnete Blasform- bzw. Umformungsstation weitergegeben werden.

Bei einer bevorzugten Ausführungsform weist die Vorrichtung wenigstens eine Zuführeinrichtung zum Zuführen von Kunststoffvorformlingen an die Erwärmungseinrichtung auf, wobei diese Zuführeinrichtung dazu geeignet und bestimmt ist, der Erwärmungseinrichtung wahlweise und vereinzelt wenigstens zwei unterschiedliche Gattungen an Kunststoffvorformlingen zuzuführen. Dabei wäre es möglich, dass diese Zuführeinrichtung mehrere Zuführschienen aufweist, die die Zuführung von unterschiedlichen Typen an Kunststoffvorformlingen erlauben, etwa Kunststoffvorformlinge, welche unterschiedliche Farbe, eine unterschiedliche Größe oder auch ein unterschiedliches Gewicht aufweisen.

Mit anderen Worten kann die Zuführung der Kunststoffvorformlinge zum Großteil durch eine spezielle Zuführtechnik durchgeführt werden, das heißt abhängig von maximal zu verarbeitenden Kunststoffvorformlingsvarianten und/oder der Art der Flexibilität der Anlage kann eine Anzahl n von Zuführungseinrichtungen für Kunststoffvorformlinge beispielsweise in der Form von Rollensortierern und deren Peripherie angeordnet werden.

Die Abnahme der jeweiligen Kunststoffvorformlinge aus der zugeordneten Kunststoffvorformlingszuführung ist besonders bevorzugt flexibel und/oder weist ein intelligentes Verteilsystem auf. Dieses Verteilsystem kann dabei bei einem fest zugeordneten Mischverhältnis teils mit einer rein mechanischen Lösung umgesetzt werden. Daneben kann auch ein elektromechanisches Verteilsystem vorgesehen sein, welches eine individuelle Zuführung der Kunststoffvorformlinge an die Erwärmungseinrichtung, beispielsweise die Mikrowellenstationen, ermöglicht und so eine hohe Variante an Verteil- und Zuordnungsmöglichkeiten erlaubt.

Bei einer weiteren vorteilhaften Ausführungsform weist die Vorrichtung eine Wechseleinrichtung und insbesondere einen Wechselroboter auf, der einen Wechsel von Blasformen der einzelnen Umformungsstationen der Umformungseinrichtung ermöglicht. Dabei kann dieser Wechselroboter eine Greifeinrichtung aufweisen, welche dazu geeignet und bestimmt ist, Blasformen entweder in ihrer Gesamtheit oder in Einzelteilen zu entnehmen und durch andere Blasformen oder Blasformteile einzuwechseln. Vorteilhaft ist dabei diese Greifeinrichtung um wenigstens drei Achsen schwenkbar, beispielsweise um drei zueinander senkrechte Achsen. Auf diese Weise kann ein automatischer Wechsel von Blasformen ermöglicht sein.

Bei einer weiteren vorteilhaften Ausführungsform ist die Transporteinrichtung, welche die Kunststoffvorformlinge von der Erwärmungseinrichtung zu der Umformungseinrichtung transportiert, dazu geeignet und bestimmt, eine Reihenfolge der von der Erwärmungseinrichtung ausgegebenen Kunststoffvorformlinge zu ändern, sodass diese Kunststoffvorformlinge in einer geänderten Reihenfolge an die Umformungseinrichtung übergeben werden.

Bevorzugt ist vorgesehen, dass von der Erwärmungseinrichtung die einzelnen Kunststoffvorformlinge (insbesondere mit deren individuellen Temperaturprofilen) an eine dafür bestimmte Blasform bzw. Umformungsstation übergeben werden. Die Umformungsstationen der Umformungseinrichtung können dabei mit identischen Blasformen ausgerüstet sein, das heißt die Umformungseinrichtung stellt sortenrein Behältnisse her. Die Umformungsstationen der Umformungseinrichtung können jedoch auch in einem insbesondere definierten Verhältnis mit unterschiedlichen Blasformen ausgestattet sein, das heißt in diesem Fall werden bei einem Umlauf eines Blasrads unterschiedliche Behältnisse (hinsichtlich Farbe, Volumen, Kontur usw.) hergestellt. Bevorzugt wird hierbei darauf geachtet, dass das Verhältnis der Erwärmungsstationen beispielsweise der Mikrowellenheizstationen zu den Blasstationen bzw. Umformungsstationen abgestimmt ist. Üblicherweise ist heute die Prozesszeit für die Erwärmung der Kunststoffvorformlinge länger, beispielsweise doppelt so lang wie die Prozesszeit für das Herstellen bzw. Umformen eines Behältnisses, insbesondere das Streckblasen eines Behältnisses.

Alternativ oder zusätzlich wäre auch die Verwendung einer flexiblen Transporteinrichtung denkbar, beispielsweise in Form eines Langstatorsystems zwischen der Erwärmungseinrichtung und der Umformungseinrichtung. Eine derartige Transporteinrichtung erlaubt in einem gewissen Maß eine "chaotische" bzw. zufällige Erwärmung der Kunststoffvorformlinge. Dabei ist es auch möglich, dass ein Verhältnis unterschiedlicher Kunststoffvorformlinge bzw. Behältnisse in einem vorgegebenen Zeitfenster bewältigt werden kann und zwar insbesondere abhängig von der vorgegebenen Ausgleichzeit und/oder der Verweilzeit für die Kunststoffvorformlinge in der Transporteinrichtung, beispielsweise dem Langstatorsystem.

Die großen Teilungen in einem Mikrowellenofen und einer Umformungseinrichtung erlauben es bevorzugt, dass Kunststoffvorformlinge, welche in einem Langstatormodul umlaufen, zwischen den Erwärmungseinrichtungen und den Umformungsstationen ohne Kollision durchfahren werden können. Bevorzugt ist aber darauf zu achten, dass in der Transporteinrichtung, beispielsweise in dem Langstatormodul, sich auch leere Bewegungseinheiten, etwa Mover, zwischen mit Kunststoffvorformlingen bestückten Movern bewegen, um auf diese Weise neue erwärmte Kunststoffvorformlinge aufnehmen zu können. Daneben könnte auch eine Transporteinrichtung mit einer Weichenfunktion, beispielsweise ein Langstator mit einer Weichenfunktion, vorgesehen sein.

So könnte beispielsweise bei einer Verarbeitung von drei verschiedenen Kunststoffvorformlingen die Transporteinrichtung, etwa deren Langstator, ein Oval aufweisen, wobei parallel zu diesem Oval noch ein oder zwei Parallelstrecken angeordnet sind, welche über Weichensegmente gekoppelt sind. Dabei ist es möglich, dass beispielsweise eine erste Preformsorte über das besagte Oval fährt, eine zweite Kunststoffvorformlingssorte kann über das Oval fahren oder aber auf die erste Parallelstrecke ausweichen und anschließend bei Anforderung wieder das Oval anfahren. Eine dritte Sorte an Kunststoffvorformlingen kann ebenfalls über das Oval zu der Umformungseinrichtung transportiert werden oder aber über die zweite Parallelstrecke ausweichen und bei Anforderung wieder über das Oval zu der Umformungseinrichtung transportiert werden.

Daneben wäre es auch möglich, dass Pufferungseinrichtungen vorgesehen sind, welche bei Bedarf einen gewünschten Kunststoffvorformling an die Umformungseinrichtung übermitteln.

Bei einer weiteren vorteilhaften Ausführungsform ist zwischen der Umformungseinrichtung und der Ausstattungseinrichtung und/oder nach der Umformungseinrichtung eine Kühleinrichtung zum Kühlen der Kunststoffbehältnisse vorgesehen. So ist es möglich, dass nach der Erwärmung der Kunststoffvorformlinge und der Herstellung der Behältnisse mittels eines Streckblasprozesses die Behältnisse an eine Etikettiermaschine übergeben werden. Zwischen der Streckblasmaschine und der Etikettiermaschine kann ein Modul zur Kühlung von Bestandteilen des Behältnisses und insbesondere des Behälterbodens integriert sein. Problematisch kann hierbei sein, dass auch unterschiedlich hohe Behältnisse (der Neck Ring entspricht einer Referenzhöhe) durch das Kühlsystem behandelt werden, das heißt die üblicherweise unterhalb der durchlaufenden Behältnisse angeordneten Kühlsysteme sollten grundsätzlich die Behälterbodenaußenseite durch das verwendete Kühlmedium erreichen und/oder den definierten Prozessabstand erreichen.

Dabei könnten unterschiedliche Systeme eingesetzt werden. So wäre es möglich, dass der Behälterboden mittels feststehender Düsen gekühlt wird, welche Wasserfontänen erzeugen, die unterschiedlich hohe Behälterböden erreichen müssen. Bei hohen Behälterböden wird dabei jedoch die Wandung des Behälters mit mehr Kühlmedium benetzt, was wiederum zu einer höheren Verschleppung eines Kühlmediums führt. Bei einer bevorzugten Ausführungsform weist die Vorrichtung Beaufschlagungssysteme wie beispielsweise Düsen auf, welche hinsichtlich wenigstens eines Parameters regelbar sind, welche beispielsweise hinsichtlich der Menge der auf den Behältnisboden gelangenden Flüssigkeit und/oder einer Austrittsgeschwindigkeit der Flüssigkeit (allgemein des Mediums) aus den Düsen und/oder hinsichtlich eines Strömungsquerschnitts der austretenden Flüssigkeit regulierbar sind.

Daneben wäre auch eine mitlaufende Bodenkühlung denkbar, wobei bevorzugt ein flüssiges Kühlmedium verwendet wird. Die Kühlmediumfontäne ist dabei so hoch, dass diese die unterschiedlich hohen Behältnisböden erreicht oder dass jede einzelne Düse individuell in der Höhe einstellbar ist. So wäre es möglich, dass die einzelnen Düsen in ihrer Höhe gegenüber den Behältnissen verstellbar sind und so mehr etwa an Behältnisböden herangeführt werden können. Auch bei dieser Ausgestaltung wäre es möglich, dass die jeweiligen Kühlmediumsdüsen auch den Blasmodulen zugeordnet werden, um die Düsen bereits vor Beginn der Produktion in der Höhe den entsprechenden Behältnishöhen anzupassen. Dies kann mechanisch und/oder elektromechanisch erfolgen.

Ein derartiges System ist auch dann geeignet, wenn anstelle eines flüssigen Kühlmediums ein zerstäubtes Kühlmedium oder auch ein Gas eingesetzt wird, da der Abstand zwischen den Behältnissen zu den jeweiligen Düsen einstellbar ist. Wie erwähnt wäre auch gekühlte Luft als Kühlmedium denkbar, allerdings in der Ausführung relativ komplex.

Bei einer weiteren vorteilhaften Ausführungsform ist die Ausstattungseinrichtung zum Ausstatten unterschiedlicher Behältnisformate geeignet und bestimmt.

In einer Druckmaschine und/oder einer Etikettiermaschine müssen unterschiedlich hohe und auch im Durchmesser unterschiedliche Behältnisse bedruckt und/oder etikettiert werden. Dies kann beispielsweise dadurch erfolgen, dass für die Einspannung und/oder Fixierung von unterschiedlich hohen Behältnissen zu nachfolgend beschriebenen Lösungen gegriffen wird.

So wäre es beispielsweise möglich, dass die Behältnisse von einem Einlaufstern mittels eines Neckhandlings an einen Behältertisch übergeben werden. Eine Behältereinspannvorrichtung kann die Behältnisse im Bereich der Mundstücke greifen, wobei das Greifen über einen Kraft- und/oder Formschluss erfolgen kann. Bevorzugt weist die Greifvorrichtung einen eigenen Servomotor auf, welcher die Behältnisse vor dem Etikettieraggregat dreht und insbesondere um die Behälterachse mit einer benötigten Drehzahl und auch der Rotationsrichtung dreht, um so den Etikettiervorgang durchzuführen. Der Boden der Behältnisse wird bevorzugt bei diesem Lösungsansatz nicht zentriert oder gestützt. Daneben wäre es auch denkbar, dass die Behältnisse auf einem Behältertisch in einem Mundstück über eine sogenannte Zentrierglocke fixiert und/oder zentriert werden und am Behältnisboden beispielsweise mittels eines Zentriertellers fixiert oder zentriert werden. Dabei ist es denkbar, dass dieser Zentrierteller unterschiedliche Behältnisdurchmesser aufnehmen kann und auch entsprechend zentrieren kann.

Dies kann beispielsweise durch eine konische Innenkontur erfolgen, welche unterschiedliche Durchmesser zentrieren kann. Um eine Mitnahme der Behältnisse bei einer eingeleiteten Rotation zu erreichen, wird bevorzugt ein angefederter Behälterteller ggfs. mit einem Belag für gute Friktionseigenschaften eingesetzt. Dieser Behälterteller wird bevorzugt elektromechanisch gegen den Behälterboden gefahren und spannt diesen bevorzugt mit einer definierten Kraft zwischen der Zentrierglocke und dem Behälterteller ein.

Eine elektromechanische Hubeinrichtung kann in der Regel bereits eine Übergabeposition anfahren, da durch die Blasmaschine und die mechanische bzw. elektromechanische Kopplung der Funktionsmodule der jeweilige Behälterteller bereits vorab die Information erhält, welche Behältnishöhe als nächstes einzuspannen ist.

Dabei kann beispielsweise für die Rotation der Behältnisse auch ein Servomotor vorhanden sein. Dieser kann beispielsweise in Hohlwellenausführung gebaut werden, wobei durch die Hohlwelle ein Hubmechanismus für den Behälterteller integriert wird. Dies ist auch in elektromechanischer Ausführung denkbar.

Eine Behälterausstattung, beispielsweise bei Einwegbehältnissen wie PET-Behältnissen, kann durch Rundum- oder Selbstklebeetiketten erfolgen. Diese Etiketten werden bevorzugt über Spendeaggregate an die Behältnisse angebracht. Abhängig von der Größe einer Grundmaschine kann dabei beispielsweise eine Anzahl von n Aggregaten bzw. eine Anzahl von m unterschiedlichen Etiketten gleichzeitig verarbeitet werden. Zu beachten ist hierbei, dass nach dem heutigen Stand der Technik Etikettenübergaben oftmals sehr nah am Behälter erfolgen, das heißt bei gleichzeitiger Verarbeitung von unterschiedlichen Behälterdurchmessern wäre es bevorzugt, dass die einzelnen Etikettieraggregate für kleinere Behältnisdurchmesser eine Ausrückfunktion aufweisen, um nicht mit größeren vorbeifahrenden Behältnissen zu kollidieren.

Mit anderen Worten weist die Vorrichtung bevorzugt Antriebsmittel auf, welche eine Bewegung von Etikettieraggregaten gegenüber dem Transportpfad der Behältnisse ermöglichen und beispielsweise ein Wegfahren oder Wegschwenken des Etikettieraggregats wenn auch nur für kurze Zeitdauern, ermöglicht. Entsprechend gilt diese Vorgehensweise auch für eine etwaige Anbürstung oder für Anrollbretter in der jeweiligen Grundmaschine bzw. der Etikettiermaschine.

Für den Etikettiervorgang selbst sind unterschiedliche Vorgehensweisen denkbar. Derzeit sind aus dem Stand der Technik Verfahren bekannt, bei denen die geschnittenen Etiketten von einer Rolle an einen Vakuumzylinder übergeben werden, welcher beispielsweise über erhabene Vakuumleisten das Etikett am Anfang und Ende ansaugt. Anschließend werden die Etiketten an einer Leimwalze vorbeigeführt und ein Etikettenanfang und ein Etikettenende werden geleimt. Durch eine weitere Drehung des Vakuumzylinders wird das Etikett mit der Anfangsbeleimung an den vorbeifahrenden Behälter übergeben, durch die Rotation der Behältnisse um dessen eigene Achse wird das Etikett beispielsweise durch eine Anbürstung oder ein Anrollbrett an dem Behälter faltenfrei angeordnet.

Ein aus dem Stand der Technik bekannter Aufbau eines Vakuumzylinders ist mehrteilig, das heißt er kann beispielsweise vier oder sechs Etiketten am Umfang aufnehmen. Da in einer flexiblen Linie nicht kontinuierlich Behältnisse mit dem gleichen Durchmesser, sondern auch gemischt bearbeitet werden, kann bevorzugt kein geschlossener Vakuumzylinder eingesetzt werden, da es zu Kollisionen mit größeren Behältnissen kommen kann. In einer Ausführungsform wird daher vorgeschlagen, dass es sich bei dem Vakuumzylinder nicht um einen geschlossenen Körper handelt, sondern dieser segmentiert aufgebaut ist, beispielsweise zweiteilig, um zwischen den beiden Segmenten größere Behältnisse vorbeifahren zu lassen. So können beispielsweise in Umfangsrichtung des Vakuumzylinders Ausnehmungen vorgesehen sein, durch welche insbesondere größere Behältnisse transportiert werden können. Dabei kann eine Drehung des Vakuumzylinders so an den Transport der Behältnisse angepasst werden, dass bei dem Transport größerer Behältnisse gerade eine Ausnehmung des Vakuumzylinders gegenüber liegt.

Besonders bevorzugt weist der Vakuumzylinder ein Segment auf. Durch einen leistungsstarken Servoantrieb kann dieses Segment bei Bedarf von einer Warte bzw. Ruheposition beschleunigen und das geschnittene Etikett beispielsweise von einer Schneideinheit abholen, beispielsweise an einer Leimwalze vorbei fahren und parallel dazu das Etikett beleimen. Anschließend kann das Etikett an das Behältnis übergeben werden. Bereits bei dem nächsten Behältnis kann das Segment in eine Warte- oder Ruheposition fahren, da dieser Behälter von dem Aggregat nicht etikettiert wird.

Bei einer bevorzugten Ausführungsform ist ein Beleimungselement wie insbesondere eine Leimwalze vorgesehen, welche die Beleimung eines Etiketts übernimmt. Alternativ oder zusätzlich können auch Heißleimspritzsysteme vorgesehen sein. Eine für den Etikettierprozess bevorzugte Anbürstung kann bevorzugt mit einem nicht stationär angeordneten Anbürstelement umgesetzt werden. Dabei ist es möglich, dass jeder Behältertellerbereich ein eigenes Bürstensegment aufweist bzw. mit einem solchen ausgestattet ist.

Da im Vorfeld nicht definiert ist, welches Behältnis an welchem Behälterteller etikettiert wird, ist es bevorzugt, dass ein Bürstenkörper eine maximal mögliche Etikettenhöhe bzw. Etikettenposition abgedeckt wird oder auch eingestellt werden kann. Dabei ist es möglich, dass ein solcher Bürstenkörper zu dem Behältnis hin schwenkbar ist, da dieser bei der Übergabe oder Abgabe der Behältnisse stören kann. Nach der Übergabe eines einlaufenden Behältnisses auf den Behältnisteller schwenkt bevorzugt der Bürstenkörper an einem Behältnismantel.

Da der Behältnisdurchmesser unterschiedlich sein kann, ist bevorzugt das Bürstenelement mittels einer Feder mit einer vorgebbaren Kraft gegen das Behältnis gedrückt. Auf diese Weise können auch die unterschiedlichen Behältnisdurchmesser ausgeglichen werden. Vor einer Abgabe der Behältnisse aus der Maschine sollte das Bürstenelement in eine Ausgangsstellung zurückgeschwenkt werden. Dabei ist es möglich, dass beispielsweise eine Steuerung, wie eine Nockensteuerung, verwendet wird. Diese kann dazu dienen, die Bürsteneinrichtungen auch individuell beispielsweise bei Erreichen eines Spendeaggregats zuzuschalten. Auch wäre es möglich, ein Schnellschalteventil (etwa einen Pusherzylinder) zu verwenden, um eine derartige Bewegung des Bürstenelements zu erreichen.

Bevorzugt ist auch ein Schneidwerk der Etikettiereinrichtung auf die entsprechende Steuerung angepasst. Dabei ist es möglich, dass dieses Schneidwerk hochdynamisch ein Etikett von der Rolle auf eine Etikettenlänge zuschneidet und an einen entsprechenden Segmentgreifer übergibt. Daneben können auch ein oder mehrere Etikettenmagazine vorgesehen sein, welche insbesondere zur Ausgabe mehrerer unterschiedlicher Etikettentypen geeignet sind. Auf diese Weise kann auch der Komfort und die Flexibilität der Etikettierungsaggregate erhöht werden.

Zusätzlich oder auch alternativ kann auch eine Anbringung von Selbstklebeetiketten vorgesehen sein. Dabei weist besonders bevorzugt eine Vorrichtung zum Anbringen von Selbstklebeetiketten eine Zuführeinrichtung auf, welche auf Trägern angeordnete Etiketten zuführt. Weiterhin ist bevorzugt ein Spendeelement wie eine Spendekante vorgesehen, um welches herum die Etiketten umgelenkt werden, um so das Etikett von seinem Träger abzulösen. Bevorzugt ist eine entsprechende Spendekante schwenkbar, damit größere Behältnisse im Umlauf mit einer Spendekante nicht kollidieren. Bei einem Wegschwenken dieser Spendekante ist es bevorzugt, dass eine Bandspannung des Trägerbandes aufrechterhalten wird. So kann beispielsweise ein hochdynamisches Bandspannungsmodul vorgesehen sein.

Daneben oder zusätzlich kann auch eine Direktbedruckung der Behältnisse beispielsweise mit einer Inkjet-Technologie vorgesehen sein. Diese kann auch die heutige bekannte Etikettiertechnik ablösen und auch neue Möglichkeiten zur Behältnisausstattung bzw. Behältnisdekoration zulassen.

Auch eine derartige Drucktechnologie ist in den genannten Maschinen oder in den Funktionsverbund einsetzbar. Hier können beispielsweise die Prozessschritte Vorbehandeln, Drucken und Endaushärtung integriert werden. Beschreibungen, Funktionsabläufe und dergleichen sind teilweise aus dem internen Stand der Technik der Anmelderin bekannt. Hier sind mehrere Systeme denkbar, welche unterschiedliche Behälteraufnahmen im Behältertisch verwenden. Bevorzugt weist die Vorrichtung wenigstens eine Druckeinrichtung wie insbesondere einen Druckkopf auf.

Dieser Druckkopf ist dabei bevorzugt dazu geeignet und bestimmt, unterschiedliche Bilder auf eine Außenwandung der Behältnisse aufzudrucken. Auch können mehrere derartige Druckeinrichtungen vorgesehen sein, wobei wiederum die einzelnen Druckeinrichtungen bevorzugt bestimmten Erwärmungsstationen zugeordnet sein können, so dass beispielsweise ein von einer bestimmten Erwärmungsstation erwärmter Kunststoffvorformling nach seiner Umformung zu einem Behältnis von einer bestimmten Druckeinrichtung bedruckt wird.

Die Vorrichtung weist eine Befüllungseinrichtung zum Befüllen von Kunststoffbehältnissen auf. Diese Befüllungseinrichtung kann dabei beispielsweise nach der Umformungseinrichtung angeordnet sein, sie kann vor oder nach der Ausstattungseinrichtung vorgesehen sein. Diese Befüllungseinrichtung weist eine Vielzahl von Füllelementen auf, wobei die Füllelemente Füllventile aufweisen, welche dazu geeignet und bestimmt sind, die Behältnisse mit unterschiedlichen Produkten zu befüllen.

Bevorzugt werden also die Behältnisse nach der Etikettierung an die Fülleinrichtung übergeben. Zwischen der Ausstattungseinrichtung, wie etwa der Etikettiereinrichtung und der Fülleinrichtung kann, wie oben erwähnt, ein Behältnisboden kühlend integriert werden. Allerdings kann dies nach dem Prozess bzw. der Behältnisqualität ausgerichtet werden. Mögliche Ausführungsformen einer Behälterkühlung sind oben dargestellt. Bevorzugt ist eine Transporteinrichtung vorgesehen, welche die Behältnisse im Neckhandling, das heißt mit Greifelementen, welche die Behältnisse an oder unter ihren Mündungen greifen, an die Befüllungseinrichtung übergeben. Die Befüllungseinrichtung weist besonders bevorzugt einen drehbaren Träger auf, an dem eine Vielzahl von Befüllungselementen angeordnet ist.

Bei einer bevorzugten Ausführungsform weist die Befüllungseinrichtung wenigstens zwei Aufnahmeeinrichtungen bzw. Reservoirs zur Aufnahme einer abzufüllenden Flüssigkeit, insbesondere eines abzufüllenden Getränks auf. Auch weist die Befüllungseinrichtung bevorzugt mehrere Leitungen auf, die getrennt voneinander ausgebildet sind und die bevorzugt zu einem bestimmten Füllelement führen. Auf diese Weise kann sehr schnell eine Umstellung von einem abzufüllenden Getränk auf ein anderes abzufüllendes Getränk erreicht werden.

Bei einer bevorzugten Ausführungsform weist die Vorrichtung eine Verschließereinrichtung zum Verschließen der Behältnisse mit Behältnisverschlüssen auf, wobei diese Verschließereinrichtung bevorzugt dazu geeignet und bestimmt ist, die Behältnisse mit wenigstens zwei unterschiedlichen Arten an Behältnisverschlüssen zu verschließen. Die mit unterschiedlichen Produkten befüllten Behältnisse können mit unterschiedlichen Verschlüssen, beispielsweise unterschiedlich farbigen Verschlüssen, verschlossen werden. Dabei ist es möglich, dass diese Verschließereinrichtung eine Vielzahl, beispielsweise wenigstens zwei, bevorzugt wenigstens drei Verschlusszuführungen aufweist, welche nach Bedarf die benötigten Verschlüsse zuführen können. Dabei kann beispielsweise eine Aufnahmestation, wie eine Pickstation, verwendet werden, welche die Verschlüsse abzieht und an das betreffende Verschließorgan übergibt.

Aus dem Stand der Technik ist es bekannt, dass nach der Verschließeinrichtung Behältnisse auf ein nachfolgendes Transportband übergeben werden. Dies kann beispielsweise über einen Absenkstern erfolgen. Da aber unterschiedliche Behältnisse bezogen auf Durchmesser und Höhe das System verlassen, ist es bevorzugt, dass diese kontrolliert an ein derartiges Auslaufband übergeben werden.

Bei einer bevorzugten Ausführung weist eine derartige Transporteinrichtung einen Zahnriemen auf, der besonders bevorzugt mit einer aktiv ansteuerbaren Klammer ausgestattet ist und die verschlossenen Behältnisse aus einem Verschließerkarussell in einer definierten Teilung übernimmt.

Besonders bevorzugt weist die Vorrichtung ein Transportband und insbesondere ein schräg in Transportrichtung steigendes Transportband auf, welches besonders bevorzugt unter diesem Zahnriemen angeordnet ist.

Der Zahnriemen kann die Behältnisse durch ein Neckhandling aus der Fülleinrichtung fördern. Sobald das höchste bzw. längste Behältnis einen Kontakt mit dem darunter synchron verlaufenden Transportband hat, kann die Klammer aktiv geöffnet werden, das heißt das Behältnis wird ab hier über das Transportband weiter transportiert.

Kleinere Behältnisse können räumlich versetzt später Kontakt mit dem Transportband haben und entsprechend müssen die Klammern in der Transportrichtung später geöffnet werden. Dabei ist es möglich, dass die Vorrichtung ein Schnellstartventil wie etwa einen Pusherzylinder aufweist, der die Klammer entsprechend der Behältnishöhe ansteuern kann. Der Ort und/oder Zeitpunkt der Ansteuerung für die Klammern kann durch eine Sensorik (eine Sensorik für die Behälterhöhen) oder durch eine Steuerung (wie etwa eine Behältnisverfolgung, eine Codierung der Behälter, ein Schieberegister oder dergleichen) aufgelöst werden. Weiterhin wäre es auch denkbar, dass eine RFID- oder QR-Codeerkennung oder sonstige Codeerkennung vorhanden ist, welche eine noch höhere Flexibilität in Bezug auf eine Produktverfolgung und eine Anlagensteuerung ermöglicht und zudem den einen oder anderen Kundennutzen mit sich bringt (wie etwa eine Produktinformation, eine Werbemöglichkeit, eine Produktverfolgung oder Logistikvorteile).

Bei einer weiteren vorteilhaften Ausführungsform sind stromabwärts des besagten Verschließers noch weitere Module vorhanden, welche insbesondere auch unterschiedliche Behältnisse in einer Verpackungsstraße weiterverarbeiten können. Dabei kann eine Verarbeitung individuell, wie der Kunde oder Endverbraucher dies wünscht, zu einer Produktzusammenstellung geführt werden.

Um die Komplexität der gesamten Anlage möglichst gering zu halten, ist es auch möglich, dass die Belegung, die Aufteilung der Behältnisse in der Blasmaschine und/oder der Ausstattungseinrichtung nach gewissen Kriterien festgelegt werden. Dabei kann beispielsweise gewählt werden, ob die Behältnisse in der Anordnung groß - klein - mittel - groß - klein - mittel usw. verarbeitet werden oder aber in der Variante groß - groß - groß - klein - klein - klein - mittel - mittel - mittel usw. Allerdings können bevorzugt diese Reihenfolgen auch frei gewählt werden und können besonders bevorzugt durch einen Benutzer, wie etwa einen Kunden, vorgegeben werden. Insgesamt ist es möglich, dass das gesamte System gemischt oder sortenreine Produkte zur Verfügung stellt. Auf diese Weise wird eine maximale Flexibilität der Anlage erreicht.

Vorteile und Zweckmäßigkeiten sind der nachfolgenden Beschreibung in Verbindung mit der Zeichnung zu entnehmen. Hierbei zeigen:
- Fig. 1: eine Darstellung einer erfindungsgemäßen Vorrichtung;
- Fig. 2: eine mögliche Ausgestaltung einer erfindungsgemäßen Vorrichtung; und
- Fig. 3: eine mögliche Ausgestaltung einer erfindungsgemäßen Vorrichtung.

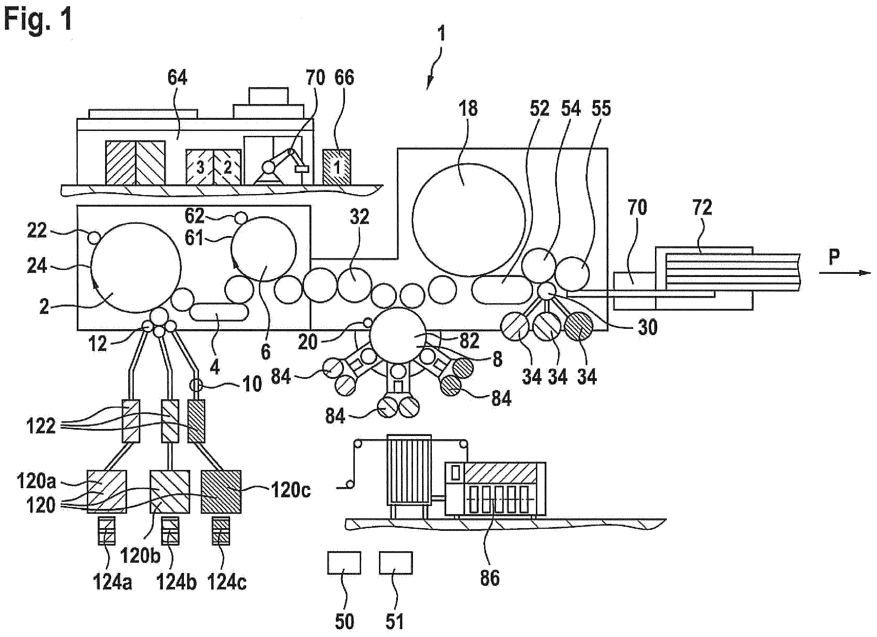

Fig. 1 zeigt eine Darstellung einer erfindungsgemäßen Vorrichtung 1 zum Behandeln von Behältnissen. Dabei bezieht sich das Bezugszeichen 12 auf eine Zuführeinrichtung, welche zum Zuführen von Kunststoffvorformlingen 10 an eine in ihrer Gesamtheit mit 2 bezeichnete Erwärmungseinrichtung dient. Diese Zuführeinrichtung weist hier Aufbewahrungseinrichtungen 120, genauer, drei Aufbewahrungseinrichtungen 120a, 120b, 120c auf, in denen die Kunststoffvorformlinge 10 aufbewahrt werden. Die Kunststoffvorformlinge können vorher in Magazinen 124a, 124b, 124c gelagert werden. Das Bezugszeichen kennzeichnet hier Sortiereinrichtungen, genauer, bevorzugt drei Rollensortierer, welche dazu dienen, um die Kunststoffvorformlinge auszurichten.

Die Kunststoffvorformlinge werden an die Erwärmungseinrichtung übergeben, Diese weist einen drehbaren Träger 24 auf, an dem eine Vielzahl von Erwärmungsstationen 22 angeordnet ist.

Nach ihrer Erwärmung werden die Kunststoffvorformlinge mittels einer Transporteinrichtung 4 (welche beispielsweise ein Langstatorsystem aufweisen kann) zu einer Umformungseinrichtung 6 transportiert. Diese Umformungseinrichtung 6 weist dabei ebenfalls einen beweglichen und insbesondere drehbaren Träger 61 auf, an dem eine Vielzahl von Umformungsstationen 62 angeordnet ist.

Das Bezugszeichen 64 kennzeichnet in ihrer Gesamtheit eine Wechseleinrichtung, welche zum Wechseln der Blasformen, welche an den einzelnen Umformungsstationen angeordnet sind, dient. Diese Wechseleinrichtung kann dabei eine Handhabungseinrichtung wie insbesondere einen Wechselroboter aufweisen der zum automatischen Wechsel der Blasformen dient. Das Bezugszeichen 66 bezieht sich auf ein Magazin zum Aufbewahren von Blasformen und/oder Blasformteilen.

Das Bezugszeichen 32 kennzeichnet eine Kühleinrichtung, welche zum Kühlen der Behältnisse, insbesondere zum Kühlen von deren Böden dient. Das Bezugszeichen 8 bezieht sich auf eine Ausstattungseinrichtung, welche zum Ausstatten der Behältnisse dient. Bei der in Fig. 1 gezeigten Ausführungsform handelt es sich bei der Ausstattungseinrichtung um eine Etikettiermaschine, welche an den Behältnissen 20 Etiketten anbringt. Diese Etikettiereinrichtung weist hier drei Etikettieraggregate auf, welche wahlweise auf den Behältnissen unterschiedliche Etiketten aufbringen kann. Wie oben erwähnt, kann eine bestimmte Erwärmungsstation einem bestimmten Etikettieraggregat zugeordnet werden. Das Bezugszeichen 82 kennzeichnet eine Transporteinrichtung, wie insbesondere einen drehbaren Träger, der zum Transportieren der Behältnisse während deren Etikettierung dient. Das Bezugszeichen 86 kennzeichnet einen Etikettenspeicher, der beispielsweise dazu dienen kann unterschiedliche Etiketten zur Verfügung zu stellen.

Das Bezugszeichen 18 kennzeichnet eine Fülleinrichtung, die zum Befüllen der Behältnisse dient. Mittels einer Transporteinrichtung 52 werden die befüllten Behältnisse zu einer Verschließeinrichtung transportiert. Diese Transporteinrichtung 52 kann dabei dazu geeignet und bestimmt sein, eine Reihenfolge der transportierten Behältnisse zu ändern.

Das Bezugszeichen 30 kennzeichnet eine Verschließereinrichtung, welche die befüllten Behältnisse mit Verschlüssen verschließt. Auch diese Verschließereinrichtung 30 kann drei mehrere, hier drei Zuführeinrichtungen 34 aufweisen, welche unterschiedliche Gattungen an Verschlüssen (etwa Verschlüsse mit unterschiedlichen Farben) zuführen können. Daneben weist die Veschließereinrichtung einen drehbaren Träger auf, der zum Transportieren der Behältnisse während des Verschließvorgangs dient.

Das Bezugszeichen 55 kennzeichnet eine weitere Transporteinrichtung, die zum Weitertransport der nunmehr befüllten und verschlossenen Behältnisse dient, etwa an eine Gruppiereinrichtung, welche die Behältnisse in Gruppen einteilt. Diese Gruppiereinrichtung kann dabei wieder eine Vielzahl von Transporteinrichtungen zum Transportieren der Behältnisse aufweisen. Das Bezugszeichen P kennzeichnet die Transportrichtung der Behältnisse.

Das Bezugszeichen 50 kennzeichnet die Zuordnungseinrichtung, welche einer bestimmten Erwärmungsstation 22 eine bestimmte Umformungsstation zuordnet. Dabei kann eine Steuerungseinrichtung 51 vorgesehen sein, welche bewirkt, dass von einer bestimmten Erwärmungsstation 22 erwärmte Kunststoffvorformlinge von einer vorherbestimmten Umformungsstation 62 zu Behältnissen umgeformt werden. So kann die Steuerungseinrichtung etwa die Transporteinrichtung 4 dahingehend steuern, dass bestimmte erwärmte Kunststoffvorformlinge bestimmten Umformungsstationen zugeführt werden.

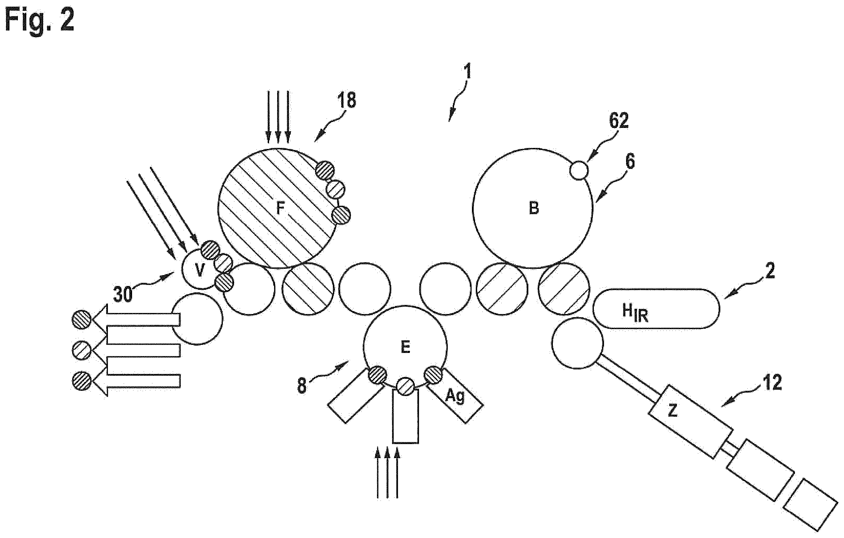

Fig. 2 zeigt eine mögliche Ausgestaltung einer erfindungsgemäßen Vorrichtung 1. Bei dieser Vorrichtung wird nur eine bestimmte Gattung an Kunststoffvorformlingen zugeführt und damit erwärmt. Auch die Umformungseinrichtung 6 ist sortenrein ausgebildet. Anschließend können die so einheitlichen Behältnisse jedoch von der Ausstattungseinrichtung mit drei unterschiedlichen Etiketten versehen werden und anschließend von einer Fülleinrichtung 18 mit drei unterschiedlichen Flüssigkeiten befüllt werden. Die Verschließeinrichtung erlaubt das Verschließen der Behältnisse mit drei unterschiedlichen Verschlussgattungen. Damit erlaubt die in Fig. 2 gezeigte Vorrichtung die Herstellung dreier verschiedener Produkte, die jedoch alle die gleiche Behältergrößer aufweisen. Dabei kann diese Vorrichtung bevorzugt steuern, zu welchen Anteilen die jeweiligen Getränke abgefüllt werden. Es können damit drei Sorten mit unterschiedlichen Getränken und entsprechend auch unterschiedlichen Etiketten und Verschlüssen hergestellt werden.

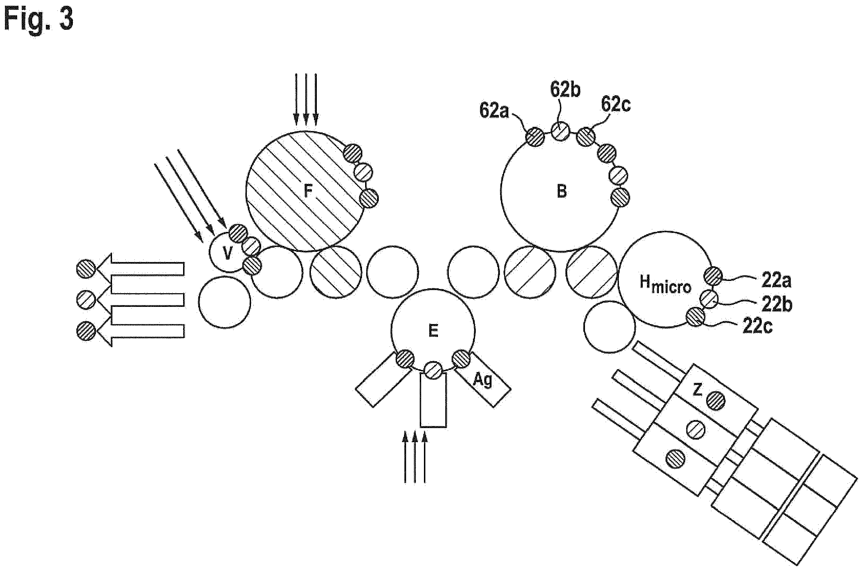

Die in Fig. 3 gezeigte Vorrichtung 1 ermöglicht zusätzlich noch die Zuführung dreier unterschiedlicher Gattungen an Kunststoffvorformlingen. Die Umformungseinrichtung 6 ist hier mit drei unterschiedlichen Gattungen an Blasformen ausgestattet. Dabei sind die einzelnen Umformungsstationen 62a, 62b und 62c den einzelnen Erwärmungsstationen 22a, 22b und 22c zugeordnet, d.h. von der Erwärmungsstation 22a erwärmte Kunststoffvorformlinge werden anschließend von der Umformungsstation 62a expandiert. Auch hier ist wieder die Etikettierung mit drei unterschiedlichen Etiketten möglich sowie auch die Befüllung mit drei Unterschiedlichen Flüssigkeiten. Damit erlaubt die in Fig. 3 gezeigte Anlage die Herstellung von insgesamt 9 unterschiedlichen Produkt-Varianten, wobei diese Herstellung insbesondere auch im Wesentlichen gleichzeitig möglich ist.

### Bezugszeichenliste

- 1: Vorrichtung
- 2: Erwärmungseinrichtung
- 4: Transporteinrichtung
- 6: Umformungseinrichtung
- 10: Kunststoffvorformlinge
- 12: Zuführungseinrichtung für Kunststoffvorformlinge
- 18: Fülleinrichtung
- 20: Behältnis
- 22, 22a-c: Erwärmungsstation
- 24: drehbarer Träger
- 30: Verschließereinrichtung
- 32: Kühleinrichtung
- 34: Zuführeinrichtung
- 50: Zuordnungseinrichtung
- 51: Steuerungseinrichtung
- 52: Transporteinrichtung
- 55: Transporteinrichtung
- 61: drehbarer Träger der Umformungseinrichtung
- 62, 62a-c: Umformungsstation
- 64: Wechseleinrichtung
- 66: Magazin für Blasformen
- 70: Wechselroboter
- 122: Sortiereinrichtungen
- 120, 120a-c: Aufbewahrungseinrichtungen für Kunststoffvorformlinge
- 124a-c: Magazine

## Patentansprüche

1. Vorrichtung (1) zum Behandeln von Behältnissen
mit einer Erwärmungseinrichtung (2) zum Erwärmen von Kunststoffvorformlingen (10),
wobei die Erwärmungseinrichtung (2) eine Vielzahl von Erwärmungsstationen (22) aufweist,
welche zum individuellen Erwärmen der Kunststoffvorformlinge (10) geeignet sind und
wobei die Erwärmungseinrichtung (2) eine Transporteinrichtung (24) aufweist, welche die Kunststoffvorformlinge vereinzelt durch die Erwärmungseinrichtung (2) transportiert,
mit einer Umformungseinrichtung (6), welche dazu geeignet und bestimmt ist, die von der Erwärmungseinrichtung (2) erwärmten Kunststoffvorformlinge (10) zu Kunststoffbehältnissen (20) umzuformen, wobei diese Umformungseinrichtung (6) in der Transportrichtung der Kunststoffvorformlinge stromabwärts bezüglich der Erwärmungseinrichtung (2) angeordnet ist und wobei diese Umformungseinrichtung (6) einen beweglichen Träger (61) aufweist, an dem eine Vielzahl von Umformungsstationen (62) zum Umformen der Kunststoffvorformlinge (20) zu den Kunststoffbehältnissen (20) angeordnet ist und
mit einer Transporteinrichtung (4), welche dazu geeignet und bestimmt ist die erwärmten Kunststoffvorformlinge vereinzelt von der Erwärmungseinrichtung zu der Umformungseinrichtung (6) zu transportieren und
mit einer Ausstattungseinrichtung (8), welche in der Transportrichtung der Kunststoffbehältnisse (20) nach der Umformungseinrichtung (6) angeordnet ist, wobei diese Ausstattungseinrichtung (8) eine Transporteinrichtung (82) zum vereinzelten Transport der Kunststoffbehältnisse (20) aufweist und wobei die Ausstattungseinrichtung (8) wenigstens ein Ausstattungsaggregat (84) oder eine Mehrzahl von Ausstattungsaggregaten (84) aufweist, welche zum Ausstatten der Kunststoffbehältnisse (20) geeignet und bestimmt sind,
wobei die Vorrichtung (1) eine Zuordnungseinrichtung (50) und/oder eine Zuordnungsmöglichkeit aufweist, welche wenigstens eine Zuordnung zwischen wenigstens einer Erwärmungsstation (22), wenigstens einer Umformungsstation, wenigstens einem Ausstattungsaggregat (84) und wenigstens einem Füllelement einer Befüllungseinrichtung (18) ermöglicht, wobei durch diese Zuordnung wenigstens teilweise die im Wesentlichen gleichzeitige Herstellung zweier Produkte möglich ist, ohne dass hierfür Umrüstarbeiten an der Vorrichtung (1) vorgenommen werden müssen und wobei es sich bei der Ausstattungseinrichtung (8) um eine Etikettiereinrichtung handelt und die Befüllungseinrichtung (18) eine Vielzahl von Füllelementen aufweist, wobei die Füllelemente Füllventile aufweisen, welche dazu geeignet und bestimmt sind, die Behältnisse mit unterschiedlichen Produkten zu befüllen,
**dadurch gekennzeichnet, dass**
die Füllventile flexible Füllventil sind, welche bis zu fünf unterschiedliche Produkte und Produktmengen abfüllen können, so dass eine gleichzeitige Abfüllung von unterschiedlichen Produkten bezogen auf die Behältnisse,
auf das Etikett und das Produkt und die Verschlüsse möglich ist.

2. Vorrichtung (1) nach Anspruch 1,
**dadurch gekennzeichnet, dass**
die Transporteinrichtung (24) der Erwärmungseinrichtung (2) einen bewegbaren Träger aufweist, an dem die Erwärmungsstationen (22) angeordnet sind.

3. Vorrichtung (1) nach wenigstens einem der vorangegangenen Ansprüche,
**dadurch gekennzeichnet, dass**
die Vorrichtung wenigstens eine Zuführeinrichtung (12) zum Zuführen von Kunststoffvorformlingen (10) an die Erwärmungseinrichtung aufweist, wobei diese Zuführeinrichtung dazu geeignet und bestimmt ist, der Erwärmungseinrichtung (2) wahlweise und vereinzelt wenigstens zwei unterschiedliche Gattungen an Kunststoffvorformlingen zuzuführen.

4. Vorrichtung (1) nach wenigstens einem der vorangegangenen Ansprüche,
**dadurch gekennzeichnet, dass**
die Vorrichtung eine Wechseleinrichtung (64) und insbesondere einen Wechselrobotor (70) aufweist, der einen Wechsel von Blasformen der einzelnen Umformungsstationen (62) ermöglicht.

5. Vorrichtung (1) nach wenigstens einem der vorangegangenen Ansprüche,
**dadurch gekennzeichnet, dass**
die Transporteinrichtung (4) dazu geeignet und bestimmt ist, eine Reihenfolge der von der Erwärmungseinrichtung (2) ausgegebenen Kunststoffvorformlinge (10) zu ändern so dass diese Kunststoffvorformlinge (10) in einer anderen Reihenfolge an die Umformungseinrichtung (6) übergeben werden.

6. Vorrichtung (1) nach wenigstens einem der vorangegangenen Ansprüche,
**dadurch gekennzeichnet, dass**
zwischen der Umformungseinrichtung (6) und der Ausstattungseinrichtung (8) eine Kühleinrichtung (32) zum Kühlen der Kunststoffbehältnisse (20) vorgesehen ist.

7. Vorrichtung (1) nach wenigstens einem der vorangegangenen Ansprüche,
**dadurch gekennzeichnet, dass**
die Ausstattungseinrichtung (8) zum Ausstatten unterschiedlicher Behältnisformate geeignet und bestimmt ist.

8. Vorrichtung (1) nach wenigstens einem der vorangegangenen Ansprüche,
**dadurch gekennzeichnet, dass**
eine Befüllungseinrichtung (18) zum Befüllen der Kunststoffbehältnisse (20) vorgesehen ist, welche eine Befüllung der Behältnisse (20) mit unterschiedlichen Flüssigkeiten ermöglicht.

9. Vorrichtung (1) nach wenigstens einem der vorangegangenen Ansprüche,
**dadurch gekennzeichnet, dass**
die Vorrichtung (1) eine Verschließereinrichtung (30) zum Verschließen der Behältnissen mit Behältnisverschlüssen aufweist, wobei diese Verschließereinrichtung (30) bevorzugt dazu geeignet und bestimmt ist, die Behältnisse mit wenigstens zwei unterschiedlichen Arten an Behältnisverschlüssen zu verschließen.

10. Verfahren (1) zum Behandeln von Behältnissen
wobei mit einer Erwärmungseinrichtung (2) Kunststoffvorformlinge (10) erwärmt werden, wobei die Erwärmungseinrichtung (2) eine Vielzahl von Erwärmungsstationen (22) aufweist, welche die Kunststoffvorformlinge (10) individuell erwärmen und wobei eine Transporteinrichtung (24) die Kunststoffvorformlinge vereinzelt durch die Erwärmungseinrichtung (2) transportiert,
wobei weiterhin eine Umformungseinrichtung (6) die von der Erwärmungseinrichtung (2) erwärmten Kunststoffvorformlinge (10) zu Kunststoffbehältnissen (20) umformt, wobei diese Umformungseinrichtung (6) in der Transportrichtung der Kunststoffvorformlinge stromabwärts bezüglich der Erwärmungseinrichtung (2) angeordnet ist und wobei diese Umformungseinrichtung (6) einen beweglichen Träger aufweist, an dem eine Vielzahl von Umformungsstationen (62) zum Umformen der Kunststoffvorform linge (20) zu den Kunststoffbehältnissen (20) angeordnet ist und
eine Transporteinrichtung (4) die erwärmten Kunststoffvorformlinge vereinzelt von der Erwärmungseinrichtung zu der Umformungseinrichtung (6) transportiert und
eine Ausstattungseinrichtung (8) vorgesehen ist, welche in der Transportrichtung der Kunststoffbehältnisse (20) nach der Umformungseinrichtung (6) angeordnet ist, wobei diese Ausstattungseinrichtung (8) eine Transporteinrichtung (82) zum vereinzelten Transport der Kunststoffbehältnisse (20) aufweist und wobei die Ausstattungseinrichtung wenigstens ein Ausstattungsaggregat oder eine Mehrzahl von Ausstattungsaggregaten (84) aufweist, welche die Kunststoffbehältnisse ausstatten,
wobei wenigstens eine Zuordnung zwischen wenigstens einer Erwärmungsstation (22), wenigstens einer Umformungsstation, wenigstens einem Ausstattungsaggregat (84) und wenigstens eines Füllelements einer Fülleinrichtung (18) ermöglicht wird, wobei durch diese Zuordnung wenigstens teilweise die im Wesentlichen gleichzeitige Herstellung zweier Produkte möglich ist, ohne dass hierfür Umrüstarbeiten vorgenommen werden müssen und
wobei es sich bei der Ausstattungseinrichtung (8) um eine Etikettiereinrichtung handelt und
die Befüllungseinrichtung (18) eine Vielzahl von Füllelementen aufweist, wobei die Füllelemente Füllventile aufweisen, welche die Behältnisse mit unterschiedlichen Produkten befüllen,
**dadurch gekennzeichnet, dass**
die Füllventile flexible Füllventil sind, welche bis zu fünf unterschiedliche Produkte und Produktmengen abfüllen können, so dass eine gleichzeitige Abfüllung von unterschiedlichen Produkten bezogen auf die Behältnisse, auf das Etikett und das Produkt und die Verschlüsse möglich ist.

## Claims

1. Device (1) for treating containers, comprising a heating device (2) for heating plastic preforms (10), wherein the heating device (2) has a plurality of heating stations (22) which are suitable for individually heating the plastic preforms (10), and wherein the heating device (2) has a transport device (24) which transports the plastic preforms individually through the heating device (2),
and comprising a reshaping device (6) which is suitable and intended for reshaping the plastic preforms (10) heated by the heating device (2) into plastic containers (20), wherein this reshaping device (6) is arranged downstream of the heating device (2) in the transport direction of the plastic preforms, and wherein this reshaping device (6) has a movable support (61), on which a plurality of reshaping stations (62) are arranged for reshaping the plastic preforms (20) into the plastic containers (20), and
comprising a transport device (4), which is suitable and intended for transporting the heated plastic preforms individually from the heating device to the reshaping device (6), and
a decorating device (8), which is arranged downstream of the reshaping device (6) in the transport direction of the plastic containers (20), wherein this decorating device (8) has a transport device (82) for individually transporting the plastic containers (20), and the decorating device (8) has at least one decorating assembly (84) or a plurality of decorating assemblies (84) which are suitable and intended for decorating the plastic containers (20),
wherein the device (1) has an assigning device (50) and/or an assigning option which allows at least one assigning process of at least one heating station (22), at least one reshaping station, at least one equipping assembly (84), and at least one filling element of one filling device (18),wherein due to this assignment at least in some instances the substantially simultaneous production of two products is enabled, without refitting work having to be carried out on the device (1) for this purpose and wherein the decorating device (8) is a labelling device and the filling device (18) has a plurality of filling elements, wherein the filling elements have filling valves which are suitable and intended to fill the containers with different products,
**characterised in that**
the filling valves are flexible filling valves which are able to fill up to five different products and quantities of products, thus enabling a simultaneous filling of different products with respect to the containers, the label and the product and the closures.

2. Device (1) according to claim 1,
**characterised in that**
the transport device (24) of the heating device (2) has a movable support on which the heating stations (22) are arranged.

3. Device (1) according to at least one of the preceding claims,
**characterised in that**
the machine has at least one feed device (12) for feeding plastic preforms (10) to the heating device, wherein this feed device is suitable and intended to feed at least two different types of plastic preforms to the heating device (2) selectively and individually.

4. Device (1) according to at least one of the preceding claims,
**characterised in that**
the machine has a changing device (64) and in particular a changing robot (70) which facilitates a change of blow moulds of the individual reshaping stations (62).

5. Device (1) according to at least one of the preceding claims,
**characterised in that**
the transport device (4) is suitable and intended for changing a sequence of plastic preforms (10) discharged from the heating device (2), so that these plastic preforms (10) are transferred to the reshaping device (6) in a modified sequence.

6. Device (1) according to at least one of the preceding claims,
**characterised in that**
a cooling device (32) for cooling the plastic containers (20) is provided between the reshaping device (6) and the decorating device (8).

7. Device (1) according to at least one of the preceding claims,
**characterised in that**
the decorating device (8) is suitable and intended for decorating different container formats.

8. Device (1) according to at least one of the preceding claims,
**characterised in that**
a filling device (18) for filling the plastic containers (20) is provided, which facilitates filling of the containers (20) with different liquids.

9. Device (1) according to at least one of the preceding claims,
**characterised in that**
the machine (1) has a closer device (30) for closing the containers with container closures, wherein this closer device (30) is preferably suitable and intended for closing the containers with at least two different types of container closures.

10. Method (1) for treating containers,
wherein plastic preforms (10) are heated by a heating device (2),
wherein the heating device (2) has a plurality of heating stations (22) which heat the plastic preforms (10) individually and wherein a transport device (24) transports the plastic preforms individually through the heating device (2),
wherein furthermore a reshaping device (6) reshapes the plastic preforms (10) heated by the heating device (2) into plastic containers (20), wherein this reshaping device (6) is arranged downstream of the heating device (2) in the transport direction of the plastic preforms, and wherein this reshaping device (6) has a movable support, on which a plurality of reshaping stations (62) are arranged for reshaping the plastic preforms (20) into the plastic containers (20), and
a transport device (4) is provided for transporting the heated plastic preforms individually from the heating device to the reshaping device (6), and
a decorating device (8) is provided, which is arranged downstream of the reshaping device (6) in the transport direction of the plastic containers (20), wherein this decorating device (8) has a transport device (82) for individual transport of the plastic containers (20), and wherein the decorating device has at least one decorating assembly or a plurality of decorating assemblies (84) which decorate the plastic containers,
wherein at least one assignment between at least one heating station (22), at least one reshaping station, at least one equipping assembly (84), and/or at least one filling device (18) is enabled, wherein due to this assignment at least in some instances the substantially simultaneous production of two products is enabled, without refitting work having to be carried out on the device (1) for this purpose and
wherein the decorating device (8) is a labelling device and
the filling device (18) has a plurality of filling elements, wherein the filling elements have filling valves which fill the containers with different products,
**characterised in that**
the filling valves are flexible filling valves which are able to fill up to five different products and quantities of products, thus enabling a simultaneous filling of different products with respect to the containers, the label and the product and the closures.

## Revendications

1. Dispositif (1) de traitement de récipients avec un équipement de chauffe (2) pour chauffer des préformes en plastique (10), dans lequel l'équipement de chauffe (2) présente une pluralité de stations de chauffe (22) adaptées pour chauffer individuellement les préformes en plastique (10) et dans lequel l'équipement de chauffe (2) présente un équipement de transport (24), transportant individuellement les préformes en plastique à travers l'équipement de chauffe (2),
avec un équipement de formage (6), adapté et déterminé pour former les préformes en plastique (10) chauffées par l'équipement de chauffe (2) pour en faire des récipients en plastique (20), dans lequel cet équipement de formage (6) est disposé dans le sens de transport des préformes en plastique en aval, de l'équipement de chauffe (2) et dans lequel cet équipement de formage (6) présente un support (61) mobile sur lequel est agencée une pluralité de stations de formage (62), afin de former les préformes en plastique (20) pour en faire des récipients en plastique (20), et
avec un équipement de transport (4), adapté et déterminé pour transporter individuellement les préformes en plastique chauffées, depuis l'équipement de chauffe (2) vers l'équipement de formage (6), et avec un dispositif d'équipement (8), lequel est agencé après l'équipement de formage (6) dans le sens de transport des récipients en plastique (20), dans lequel ce dispositif d'équipement (8) présente un équipement de transport (82), pour transporter individuellement les récipients en plastique (20) et dans lequel le dispositif d'équipement (8) présente au moins un groupe d'équipements (84), ou une pluralité de groupes d'équipements (84), lesquels sont adaptés et déterminés pour équiper les récipients en plastique (20),
dans lequel le dispositif (1) présente un équipement d'affectation (50) et/ou une option d'affectation, laquelle permet au moins une affectation entre au moins une station de chauffe (22), au moins une station de formage, au moins un groupe d'équipements (84) et au moins un élément de remplissage d'un équipement de remplissage (18), dans lequel la production essentiellement simultanée de deux produits, est au moins partiellement possible, via cette affectation sans qu'il ne soit nécessaire d'entreprendre des travaux de réajustement au niveau du dispositif (1), et dans lequel dispositif d'équipement (8) est un équipement d'étiquetage, et l'équipement de remplissage (18) présente une pluralité d'éléments de remplissage présentant des vannes de remplissage adaptées et déterminées pour remplir les récipients avec des produits différents,
**caractérisé en ce que**
les vannes de remplissage sont des vannes de remplissage flexibles qui peuvent embouteiller jusqu'à cinq produits et quantités de produit différents, de sorte qu'une mise en bouteille simultanée de produits différents soit possible en ce qui concerne les récipients, l'étiquette et le produit et les bouchons.

2. Dispositif (1) selon la revendication 1,
**caractérisé en ce que**
l'équipement de transport (24) de l'équipement de chauffe (2) présente un support mobile sur lequel sont agencées les stations de chauffe (22).

3. Dispositif (1) selon au moins l'une des revendications précédentes,
**caractérisé en ce que**
le dispositif présente au moins un équipement d'alimentation (12) pour amener des préformes en plastique (10) jusqu'à l'équipement de chauffe, dans lequel cet équipement d'alimentation est adapté et déterminé pour amener sélectivement et individuellement au moins deux types différents de préformes en plastique à l'équipement de chauffe (2).

4. Dispositif (1) selon au moins l'une des revendications précédentes,
**caractérisé en ce que**
le dispositif présente un équipement d'échange (64), et en particulier un robot d'échange (70), qui permet de changer les moules de soufflage des différentes stations de formage (62) individuelles.

5. Dispositif (1) selon au moins l'une des revendications précédentes,
**caractérisé en ce que**
l'équipement de transport (4) est adapté et déterminé pour modifier un ordre des préformes en plastique (10), fournies par l'équipement de chauffe (2) de sorte que ces préformes en plastique (10) soient transmises à l'équipement de formage (6) selon un ordre différent.

6. Dispositif (1) selon au moins l'une des revendications précédentes,
**caractérisé en ce que**,
entre l'équipement de formage (6) et le dispositif d'équipement (8), est prévu un équipement de refroidissement (32) pour refroidir les récipients en plastique (20).

7. Dispositif (1) selon au moins l'une des revendications précédentes,
**caractérisé en ce que**
le dispositif d'équipement (8) est adapté et déterminé pour équiper des formats de récipient différents.

8. Dispositif (1) selon au moins l'une des revendications précédentes,
**caractérisé en ce que**
un équipement de remplissage (18) est prévu pour remplir les récipients en plastique (20) avec des fluides différents.

9. Dispositif (1) selon au moins l'une des revendications précédentes,
**caractérisé en ce que**
le dispositif (1) présente un équipement de fermeture (30) pour fermer les récipients avec des bouchons de récipient, dans lequel cet équipement de fermeture (30) est de préférence adapté et déterminé pour fermer les récipients avec au moins deux sortes différentes de bouchons de récipient.

10. Procédé (1) de traitement de récipients
dans lequel des préformes en plastique (10) sont chauffées avec un équipement de chauffe (2) qui présente une pluralité de stations de chauffe (22), lesquelles chauffent individuellement les préformes en plastique, (10) et dans lequel, un équipement de transport (24) transporte individuellement les préformes en plastique à travers l'équipement de chauffe (2),
dans lequel, en outre, un équipement de formage (6) forme les préformes en plastique (10) chauffées par l'équipement de chauffe (2), pour en faire des récipients en plastique (20), dans lequel cet équipement de formage (6) est agencé dans le sens de transport des préformes en plastique en aval de l'équipement de chauffe (2) et présente un support mobile sur lequel est agencée une pluralité de stations de formage (62) afin de former les préformes en plastique (10) pour en faire des récipients en plastique (20), et
un équipement de transport (4), qui transporte individuellement les préformes en plastique chauffées depuis l'équipement de chauffe vers l'équipement de formage (6), et
un dispositif d'équipement (8) est prévu après l'équipement de formage (6) dans le sens de transport des récipients en plastique (20), dans lequel ce dispositif d'équipement (8) présente un équipement de transport (82),pour transporter individuellement les récipients en plastique (20), et au moins un groupe d'équipements ou une pluralité de groupes d'équipements (84), lesquels équipent les récipients en plastique,
dans lequel au moins une affectation est rendue possible, entre au moins une station de chauffe (22), au moins une station de formage, au moins un groupe d'équipements (84) et au moins un élément de remplissage d'un équipement de remplissage (18) ; la production essentiellement simultanée de deux produits différents est au moins partiellement possible, via cette affectation, sans qu'il ne soit nécessaire d'entreprendre des travaux de réajustement, et
dans lequel le dispositif d'équipement (8) est un équipement d'étiquetage, et
l'équipement de remplissage (18) présente une pluralité d'éléments de remplissage, dans lequel les éléments de remplissage présentent des vannes de remplissage, remplissant les récipients avec des produits différents,
**caractérisé en ce que**
les vannes de remplissage sont des vannes de remplissage flexibles, lesquelles peuvent embouteiller jusqu'à cinq produits et quantités de produit différents, de sorte qu'une mise en bouteille simultanée de produits différents soit possible, en ce qui concerne les récipients, l'étiquette et le produit et les bouchons.
